# EUROPEAN PATENT APPLICATION

(11) **EP 1 815 898 A2**
(43) Date of publication of application: **08.08.2007**
(21) Application number: 07250249.5
(22) Date of filing: 22.01.2007
(51) Int. Cl.: A63F 13/10

(54) **Program for controlling display of simulation video digest**

(30) Priority: 25.01.2006 JP 2006016775
(71) Applicant: SEGA CORPORATION, Tokyo 144-8531 (JP)
(72) Inventor: Suzuki, Nobuhiro, c/o Sega Corporation, Tokyo, 144-8531 (JP)
(74) Representative: Billington, Lawrence Emlyn

(57) **Abstract**

Image processing device is able to obtain digest video of an actual video with a simple configuration and has processor that generates simulation video data, image display control circuit that converts simulation video data into video signal and displays video signal on a display device, primary buffer that reads the simulation data and stores data of simulation data for a continuous predetermined period of time, wherein the processor detects occurrence of predetermined conditions in simulation data, and a digest replay buffer stores, as one scene of digest data, and data is stored in the primary buffer prior to the time of the occurrence of the predetermined conditions and simulation data for a period of time from when predetermined conditions occurred until when the storage termination conditions are satisfied.

## Description

### CROSS-REFERENCE TO RELATED APPLICATIONS

This application is based upon and claims the benefit of priority from the prior Japanese Patent Application No.2006-016775, filed on January 25, 2006, the entire contents of which are incorporated herein by reference.

### BACKGROUND OF THE INVENTION

### 1. Field of the Invention

The present invention relates to a program that controls the display of a digest of simulation video, and that is executed on a computer.

### 2. Description of the Related Art

In recent years, in game devices, which are a form of image processing device, there have been many examples of game program that are executed to simulate the development of a sports competition as a competitive game.

For example, as a simulation video of a sports game, a soccer game is simulated for three minutes per game and displayed on a display device.

Here, by displaying only the highlight scenes of the video (digest version) of the simulation video of the sports game, it is possible to prevent the players of the game device from tiring and maintain their interest.

As a conventional example of display of digest video in this type of simulation video, there is the simple method of preparing a large quantity of scene data in advance, selecting from this prepared material, and replaying it. However, because the video is simply prepared in advance, there is a feeling of incompatibility with the actual video.

On the other hand, the patent disclosed in Patent Document 1 is known. In the patent disclosed in Patent Document 1, in for example a soccer game, at times when the ball is dead during the game (goal scenes, or foul scenes), images related only to goal scenes or foul scenes up to that time are collected, and the collected images are edited and digest video is created so that there is no feeling of incompatibility with the continuous movement.

Patent Document 1: Japanese Patent Application Laid-open No. 2001-325607

As described above, in the conventional art, the created digest video differs from the actual video, and in the patent disclosed in Patent Document 1, editing work (thinking and calculation) is necessary for the collected images, so the processing circuit or the software processing becomes complex, and the number of time operations inevitably increases. Furthermore, in Patent Document 1, what kind of means is used or how to store and control the thinking and calculation results is not disclosed, also, it is not disclosed what to display during the thinking and calculation so that the digest is displayed after the thinking and calculation. Therefore, based on the disclosure of Patent Document 1 only, there is the problem that during the display and replay of the digest, waiting time occurs.

### SUMMARY OF THE INVENTION

Therefore, it is an object of the present invention to provide a program that is executed on a computer and that has a simple configuration, that controls the display of a digest of simulation video, and that can obtain digest video of an actual video without requiring processing time.

A first aspect of the present invention that solves the above problems is a program that controls the display of a digest of simulation video and that is executed on a computer, the program causing the computer to function as: a simulation calculation unit that carries out simulation calculations in time series order to generate simulation video of phenomena that change with the passage of time; a digest scene start determination unit that determines a digest scene start time based on predetermined start conditions; a digest scene termination determination unit that determines the digest scene termination time based on predetermined termination conditions; a buffer storage unit that that stores the simulation calculation result from the determined starting time until the determined termination time as a single digest scene in free area in time series order and that is capable of storing a plurality of the digest scenes; a digest scene selection unit that after one or more digest scenes are stored in the buffer storage unit selects a single digest scene from among the digest scenes; a simulation video generation unit that reads the selected digest scene in time series order and generates simulation video; a simulation video display unit that replays and displays the generated simulation video at a speed slower than the speed of the simulation calculation; and a space release unit that after the selected digest scene has been read in time series order logically releases, as free area, space of the buffer storage unit in which the selected digest scene was stored.

In the above first aspect, the single digest scene selected by the digest scene selection unit may be the oldest digest scene in the time series order.

In the above first aspect, the start time determined by the digest scene start determination unit may be a time set corresponding to the predetermined start conditions, the time being prior to a time of occurrence of the predetermined start conditions for a predetermined period time.

In the above first aspect, simulation calculation by the simulation calculation unit may be temporarily stopped if the buffer storage unit is full, and restarted when free area is made in the buffer storage unit.

In the above first aspect, a priority may be set for the digest scenes, and when the buffer storage unit is full the space release unit logically releases digest scenes with low priority as free area.

In the above first aspect, when there is no digest scene that can be replayed in the buffer storage unit, the buffer storage unit may set a special emergency scene.

Further, in the above first aspect, the buffer storage unit may have primary buffer space and digest replay buffer space, the simulation calculation results by the simulation calculation unit is stored one by one in the primary buffer space, the termination time determined after the start time is determined by the digest scene start determination unit and the digest scene termination determination unit based on the simulation calculation results stored in the primary buffer space, and the digest scene from the determined start time to the termination time is stored in the digest replay buffer space.

The problems that the digest replay buffer has limited capacity and that simulation video data calculation takes time are solved by the present invention, therefore, it is possible to provide an image processing device that is capable of obtaining digest video of an actual video with a simple configuration and without requiring processing time, and a program in the image processing device that controls the display of the simulation video digest.

Furthermore, there is no waiting time for thinking and calculation, so the digest can be replayed without interruption.

### BRIEF DESCRIPTION OF THE DRAWING

Fig. 1 is a block diagram showing an example of the configuration of a game device as an image processing device according to the present invention.
Fig. 2 is a diagram that explains the basic concept of simulation video digest display control by a program according to the present invention.
Fig. 3 is a diagram to further explain the primary buffer 2 and digest scene extraction.
Fig. 4 is a diagram to explain the basic configuration of the digest replay buffer 1.
Fig. 5 is the digest video calculation process flow (part 1).
Fig. 6 is the digest video calculation process flow (part 2).
Fig. 7 shows the digest video replay process flow.
Fig. 8 is a table showing an example of digest scene storage start conditions.
Fig. 9 is a diagram showing an example in which scenes are stored from the end of the currently stored scenes, without deleting the presently stored scenes.
Fig. 10 is a diagram showing an example of the case where the currently replaying scene (I) and the next replay candidate scene (II) are stored, and 12 seconds of vacant area (III) is not available.
Fig. 11 is an example of the criteria for determining the scene priority in Fig. 10.
Fig. 12 is a diagram explaining the game calculation and scene storage loop process (Step S10) in Fig. 6.
Fig. 13 is a diagram showing an example of scene storage termination conditions.
Fig. 14 is a diagram explaining an example in which scenes are directly written to the digest replay buffer 1, while at the same time a scene starts to be replayed from the beginning.
Fig. 15 is a diagram showing the process for the case that the stored quantity the digest replay buffer 1 exceeds 24 seconds.
Fig. 16 is a diagram showing a pre-game performance table of the digest game.
Fig. 17 is a diagram to explain the re-play timing.
Fig. 18 is a diagram showing an example in which the present invention is realized with only a digest replay buffer 1, without using a primary buffer 10.
Fig. 19 is a diagram showing another example in which the present invention is realized with only a digest replay buffer 1, without using a primary buffer 10.

### DETAILED DESCRIPTION OF THE PREFERRED EMBODIMENTS

The following is an explanation of the embodiments of the present invention in accordance with the drawings. The embodiments are for understanding the present invention, the technical scope of the present invention is not limited by the embodiments, but extends to the scope of the claims and the equivalent scope.

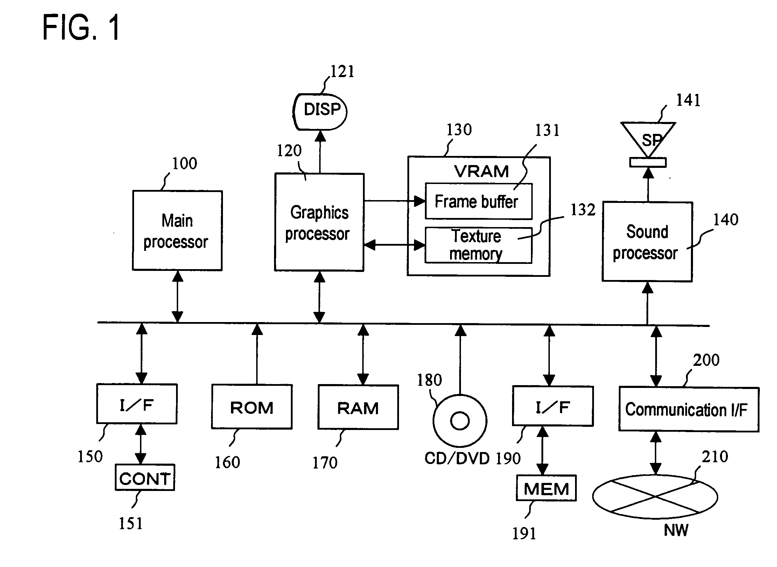

Fig. 1 is a block diagram of an example of the configuration of an image processing device as a computer according to the present invention, which specifically functions as a game device.

In particular, as an embodiment, reference is made to interactive game systems that progress in relation to the operations of players, but based on the principle of the present invention, the present invention may be applied to all phenomena that change with the passage of time, by the execution of processes by a dedicated replay simulation program without interaction.

In other words, the present invention may be applied not only to sports, but also to weather, war, ocean currents, planetary bodies, and other images that normally change.

The game device in Fig. 1 can be applied in many different forms. In other words, the game device in Fig. 1 can be used as a domestic video game machine, or an amusement game device disposed in a game center. Furthermore, the present invention can also be applied as an independent game device, or when configured so that games can be implemented among a plurality of game devices via a network.

In Fig. 1, a main processor (CPU) 100 executes game processes, image processes, and sound processes corresponding to operation signals or similar corresponding to the operations of players, based on a game program stored on a disk shaped ROM 180 such as a CD / DVD or a semiconductor storage medium 191 connected to an interface 190, or a game program transmitted via a network 210 such as the internet or similar via a communication interface 200. Also, besides a disk shaped ROM 180 such as a CD / DVD, the main processor 100 may process in accordance with a game program stored in a magnetic storage medium such as a HDD or similar.

Furthermore, coordinate conversions, visual conversions, light source calculations, and other geometric processes are carried out by the main processor 100 or by a coprocessor that is not shown in the drawings, that is provided when necessary separately from the main processor 100.

Operation signals corresponding to the operations of a player are transmitted to the main processor 100 by a game controller 151 via a communication interface 150.

A ROM 160 stores programs that control the overall system, or in game devices for commercial use, stores further game programs.

A RAM 170 is the main memory, that holds the operational data during the execution of a game.

A sound processor 140 generates sound output corresponding to sound data created by the main processor 100, and outputs the sound output to a speaker 141.

A graphics processor 120 executes graphics processes for objects formed using polygons or other volumes. For each frame (synchronized with the video frame) that constitutes the game images object data is send from the main processor 100 to the graphics processor 120. At the same time, the necessary texture data is transmitted to and stored in a texture memory 132 that is formed from a part of the area of a VRAM 130.

Based on object data sent by the main processor 100, the graphics processor 120 generates a texture corresponding to the object, and stores the texture in the texture memory 132 of the VRAM 130.

Then, the polygons that constitute the objects are sorted in turn using a Z buffer or similar, and while the shaded surface process is carried out, the textures stored in the texture memory 132 are pasted, and one frame is created in a frame buffer 131 that is formed in part of the VRAM 130. At this time, other necessary image processes are carried out in accordance with the game program, for example, the semi-transparent process, shading, and other processes. The image created in the frame buffer 131 is output and displayed on a display 121.

In the processes and configuration described above, the present invention is an image processing device that displays sports games, such as soccer for example, that are executed by a simulation program in which the game development is totally controlled by the main processor 100, as a digest of the game video, in particular not for game programs in which the game development is interactively controlled corresponding to operations on the game controller 151 of a player. Also, the present invention is applicable to the program that controls the digest display of the simulation video in an image processing device.

Here, before the detailed explanation of the embodiment of the present invention, the characteristics of the present invention are schematically explained, to simplify understanding.

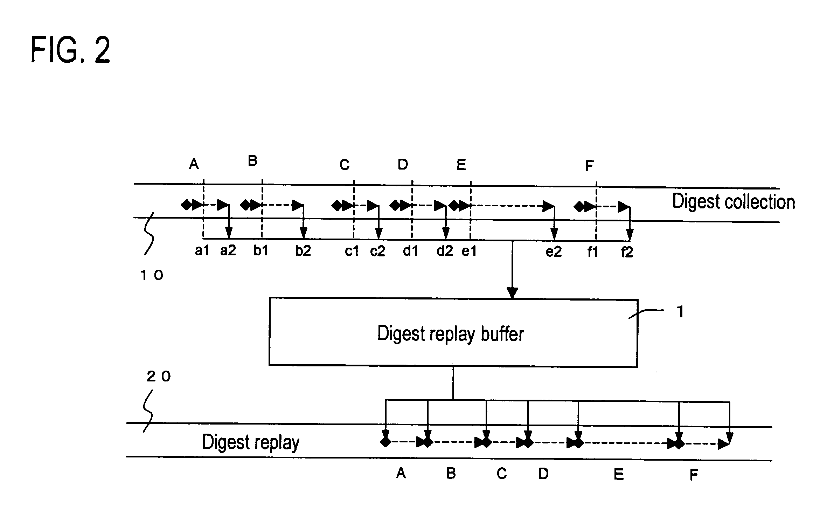

Fig. 2 is a diagram that explains the basic concept of simulation video digest display control by a program according to the present invention.

In Fig. 2, a digest replay buffer 1 is provided as a requirement for the present invention. The replay buffer 1 has either independent memory, or memory can be obtained by providing a buffer space in the RAM 170 in Fig. 1.

A simulation program as a game program is executed in the main processor 100, the simulation data is calculated, and simulation video data 10 is created.

The simulation data includes, assuming for example a soccer game, identification data for each individual player, characteristic data, and data to control the development of the game, and so on.

Simulation video data 10 is created by calculation based on the player identification data and characteristic data in accordance with the game development control data. As explained above, the simulation video data 10 is processed by the graphics processor 120 in Fig. 1 and simulation video data is created. Details of the processing by this type of graphics processor 120 are not directly related to the characteristics of the present invention, so further explanation is omitted.

Returning to Fig. 2, in the process of creating the simulation video data 10 the main processor 100 can buffer for a fixed time, for example five seconds, and successively accumulate in a primary buffer that is not shown the figure. Furthermore, the main processor 100 detects scenes in the simulation video data 10 that conform to predetermined digest conditions.

For example, in scene A, at the time a1 an event that conforms to the predetermined digest conditions is detected. In this case simulation video data for the previous five seconds is accumulated in the primary buffer, and simulation video data is stored in the digest replay buffer 1 until a time a2 subsequent to the time a1 conforming to digest termination conditions.

In the same way, at scene B the main processor 100 detects the predetermined digest conditions at time b1, and simulation video data for the previous five seconds is accumulated in the primary buffer, and simulation video data is stored in the digest replay buffer 1 until a time b2 subsequent to the time b1 conforming to digest termination conditions.

In this way, digest video data stored in the digest replay buffer 1 is read out as digest replay data 20. As shown in Fig. 2, digest replay data 20 has the collected digest scenes A, B, C, D, E, F continuous. In this way, the digest replay data 20 is sent to the graphics processor 120 shown in Fig. 1.

In the graphics processor 120, rendering processes linked to the texture memory 132 are carried out, and video data is created in the frame buffer 131. Then, the video data is converted into a video signal, and the digest scenes A, B, C, D, E, F are successively output and displayed on the display 121.

Therefore, as a characteristic of the present invention, from Fig. 2, while the digest replay data 20 is being processed for display, further new simulation video data 10 is being generated in parallel.

In other words, in the configuration in which digest scenes are replayed after waiting for the termination of the simulation video data 10 calculation, time is required for the display of the digest. In contrast to this, calculation of the simulation video data 10 in the present invention and control of display of the digest replay data 20 are processed in parallel, so the digest video can be obtained without requiring time.

Here, attention is focused onto a single scene, to consider how to extract a more desirable digest scene.

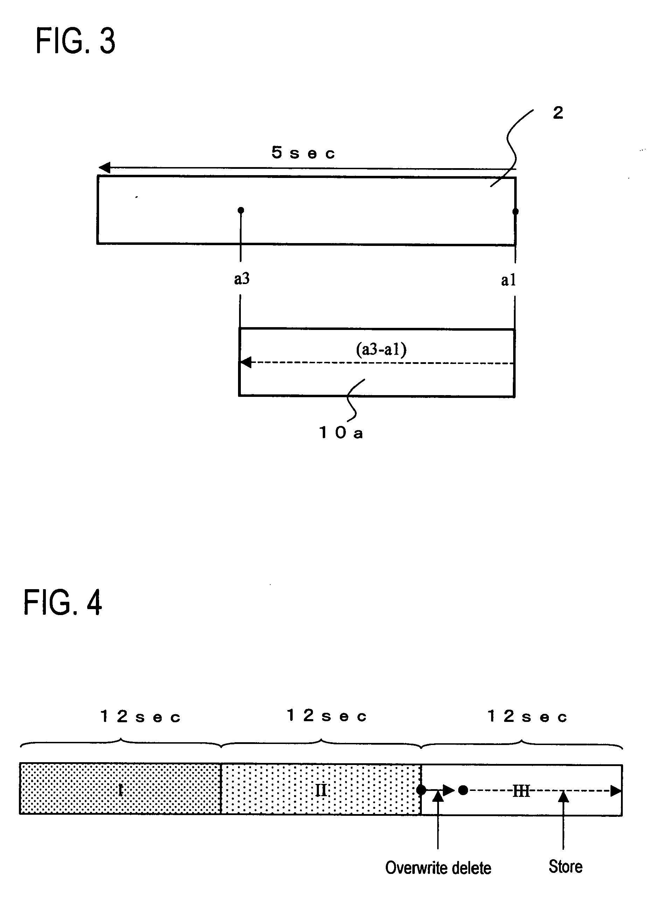

Fig. 3 is a diagram to further explain a primary buffer 2 and extracting the digest scene.

As stated above, it has been explained that when an event that conforms to the digest scene conditions is detected (for example, in scene A, the time a1 is the time when conformance with the conditions is detected), all the simulation video data 10 accumulated in the primary buffer 2 backwards in time from the time a1 of detection of the digest scene conditions is stored in the digest replay buffer 1. In this case, the start time for all the digest scenes is the buffering time of the primary buffer 2 (for example, five seconds) prior to the time of detection of digest scene conditions conformance.

However, even though the digest scene conditions are detected, there will be cases when the digest scene start time will not be suitable. For example, in a soccer game, it can result in situations such as during a pass suddenly the scene is before the goal. Therefore, there is the problem that uniformly setting the start time of the digest scenes will result in not properly providing digest scenes.

Therefore, in the example shown in Fig. 3, to avoid this type of situation, when conformance with the digest scene conditions is detected (time a1), and further the existence of predetermined situations, in other words data indicating recent dribbling (moving while controlling the ball with the feet) or ball keep (keeping the ball so that it is not taken by a rival player) motions, and so on, is determined from the simulation video data 10 stored in the primary buffer 2, and from that time (the time a3 in Fig. 3) onwards simulation video data (a3 - a1) 10a is collected, and stored in the digest replay buffer 1.

Fig. 4 is a diagram to explain the basic configuration of the digest replay buffer 1.

As an example, the digest replay buffer 1 has capacity to accumulate 12 seconds each of simulation video data 10.

In Fig. 4, as an example a single digest scene can be a maximum of 12 seconds. In this case, if the buffer capacity of the digest replay buffer 1 is 36 seconds, up to three scenes (I, II, III) can be stored. Also, if the digest scene video data that is currently being stored (III) exceeds 12 seconds, the beginning of the area (III) where the digest video data is being stored only is overwritten and deleted in a sliding action. In this way, the recording period of one scene can always be kept to within 12 seconds.

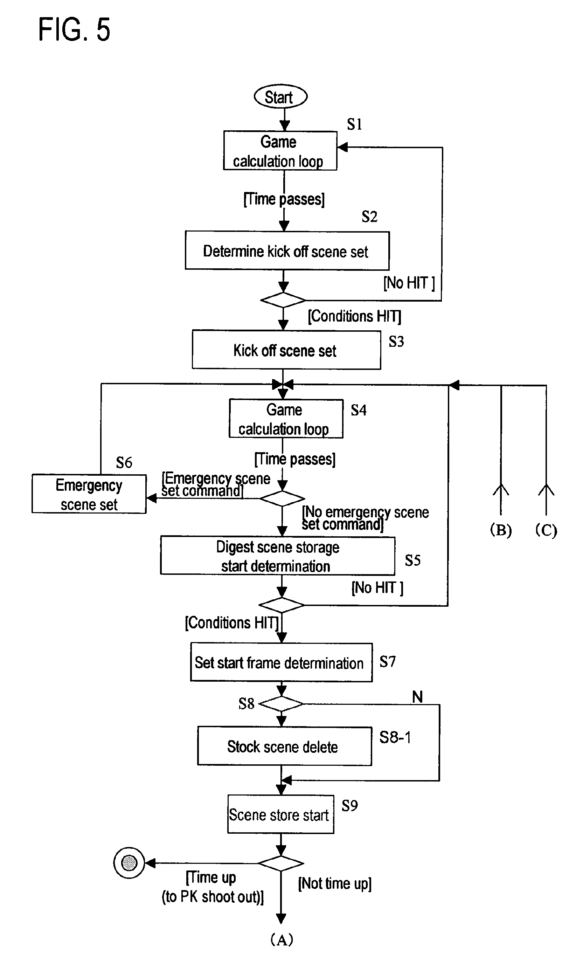

Next, as a more specific example using a soccer game as an example, the control procedure for displaying a simulation video digest according to the present invention is explained with reference to the process flows in Figs. 5 through 7.

The program that controls the process flows in Figs. 5 through 7 as a simulation program is, for example, stored in the ROM 160 in the system shown in Fig. 1, and execution is controlled by the main processor 100. In this way, it is possible to configure each functional means to realize the present invention.

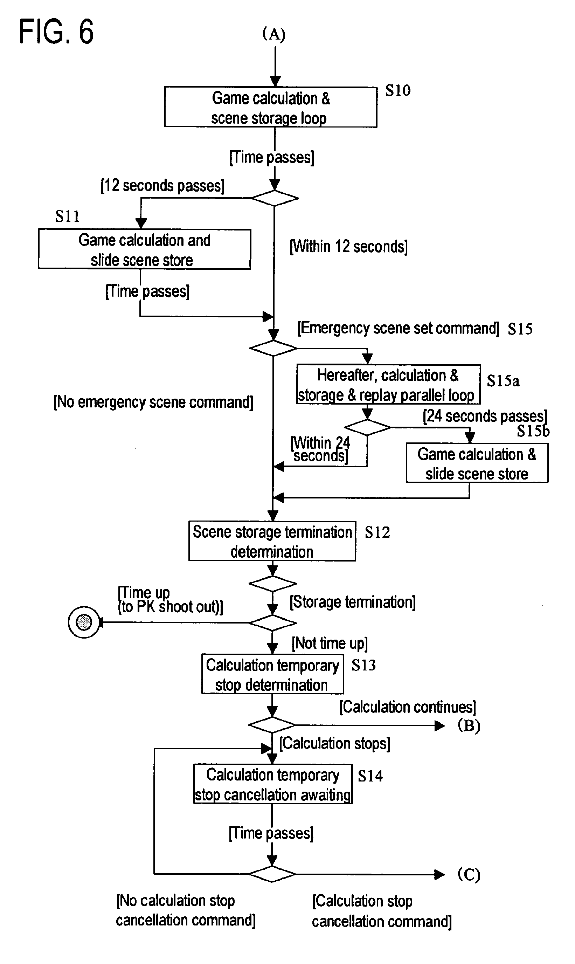

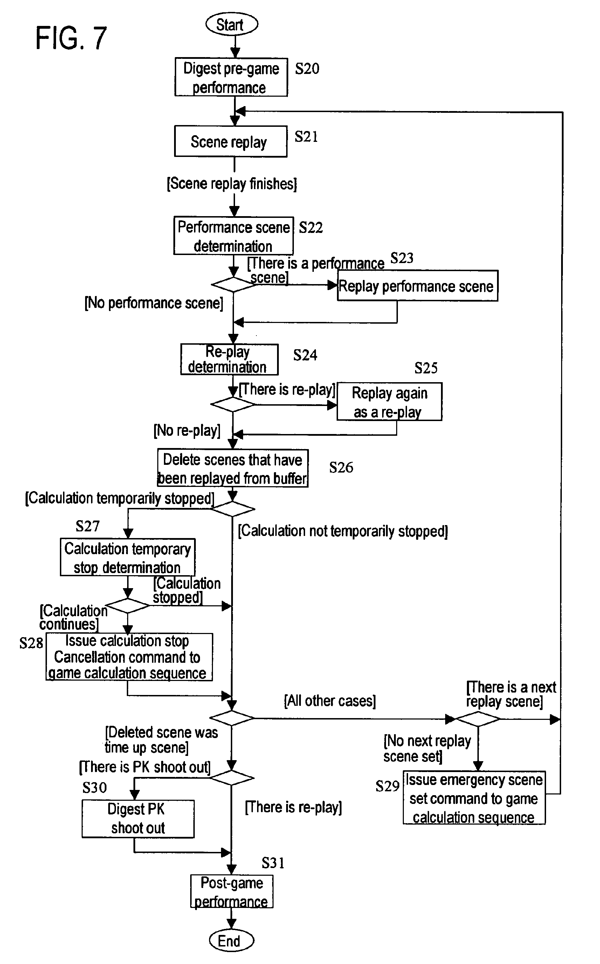

Figs. 5 and 6 are the digest video calculation process flow, and Fig. 7 is the digest video replay process flow.

In Fig. 5, when the process starts, the calculation loop to generate the soccer game simulation video data 10 is executed in one frame units (Step S1).

In the process of the calculation loop a kick-off (game restart) scene determination is carried out (Step S2). In other words, when three seconds has passed, or it is determined that the conditions for out play have occurred, it is determined that there is a kick-off scene.

When it is determined that there is a kick-off scene, the scene data from the start of the game until the time of determination that is stored in the primary buffer 2 (Fig. 3) is set in the digest replay buffer 1 (Step S3). The continuing game calculation loop process is carried out (Step S4). The game calculation loop process functions as simulation calculation means in the image processing device according to the present invention.

Here, if there is an emergency scene setting command which is explained later, the emergency scene is set in the digest replay buffer 1 (Step S6).

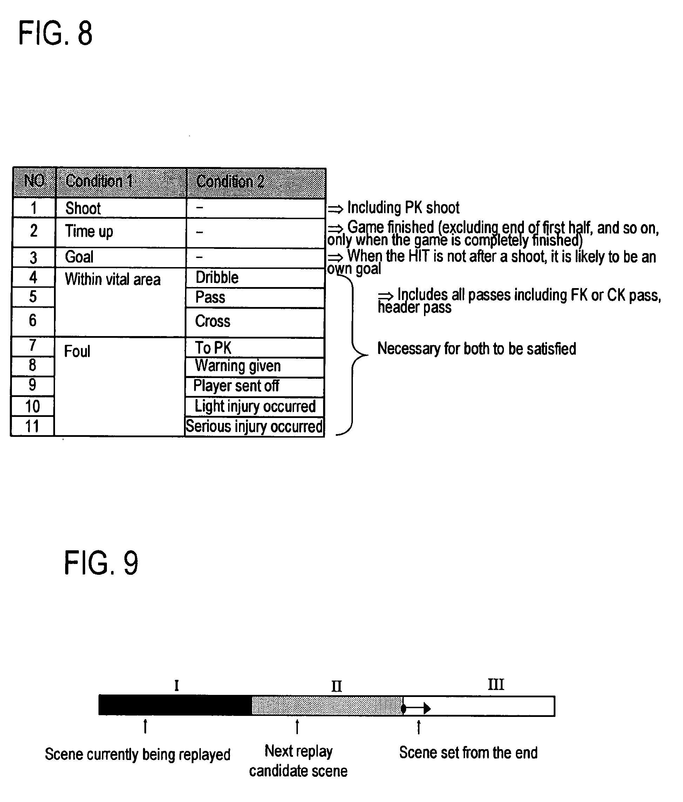

In the game calculation loop process (Step S4), as explained already in Fig. 2, it is determined whether there is conformance with the digest scene storage start conditions (Step S5). In the soccer game as an embodiment, when there is conformance with any of the conditions in Table T1 shown in Fig. 8 (corresponding to the times a1, b1, c1, d1, e1, f1, and so on in Fig. 2), storage of the digest scene starts.

Therefore, the process as in Step S5 functions as digest scene start determination means in the image processing device according to the present invention.

As a simple explanation of the conditions in Table T1 in Fig. 8, in the left hand column is a condition item number, corresponding to which condition 1 and condition 2 are set.

When conditions such as these to start storing a digest scene are detected, it is determined what point in time in the past five seconds of frames stored in the primary buffer 2 should be the set start (Step S7).

By determining the set start frame, it is determined from what frame in the past of the scene currently in the primary buffer 2 (Fig. 3) is the data stored in the digest replay buffer 11.

For example, if the set scene is a scene from a restart [PK (penalty kick), FK (free kick), CK (corner kick)], the scene is extracted from one second (60 frames) prior to the restart kick, and stored in the digest replay buffer 1. If there is not one second of data prior to the restart, a full five seconds (300 frames) is set.

Or, if the scene is not a restart scene, the scene is extracted using three seconds (180 frames) prior to the primary buffer 2 termination time as the condition for the start point for the starting frame for i. dribbling motion (moving while controlling the ball with the feet) or keep motion (keeping the ball so that the ball is not taken by a rival player), or ii. trap motion (stopping and controlling a rolling or flying ball).

Next, it is determined whether to delete a stock scene (Step 8). This process determines whether to delete a scene stored in the digest replay buffer 1 by reference to the number of scenes and the amount stored.

In other words, as a first embodiment, in the case shown in Fig. 9, following the scene currently being replayed (I), the next replay candidate scene (II) is stored, but after this there is 12 seconds of empty area (III). Therefore, in this case the currently stored scenes are not deleted, and scenes are stored from the end of the currently stocked scenes.

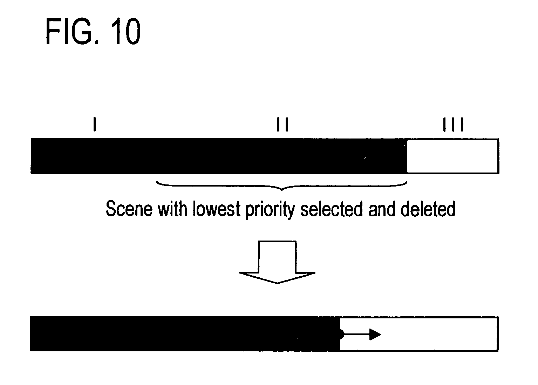

The situation shown in Fig. 10 is an example of the case where the scene currently being replayed (I) and the next replay candidate scene (II) are stored, but there is not 12 seconds capacity of vacant area (III).

At this time, the scene with the lowest priority among the scenes apart from the scene currently being replayed is selected and deleted (Step S8-1). Then at least 12 seconds of vacant capacity is obtained by filling the area in front opened up by deleting the scene, and the next digest scene is set from the end zone.

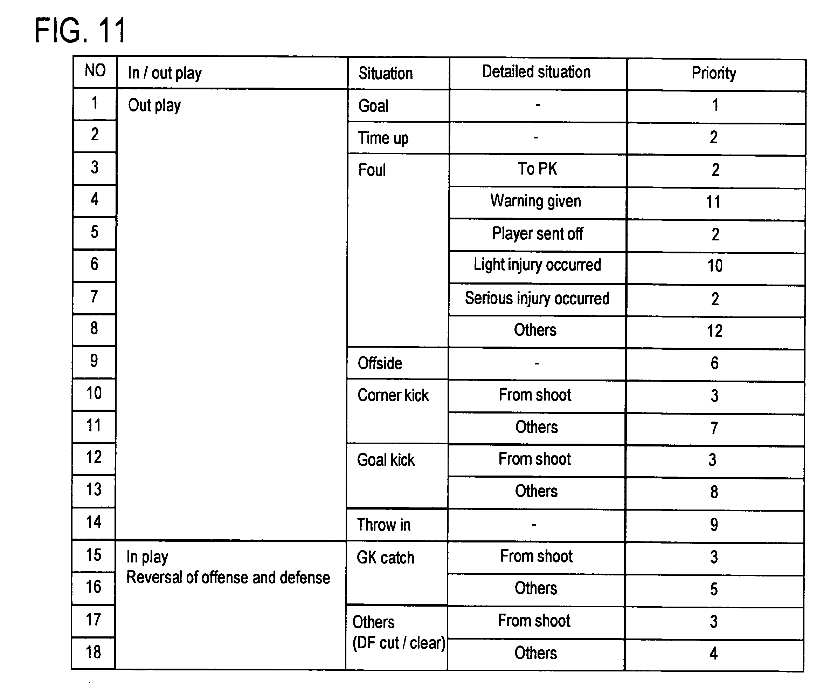

Fig. 11 is an example of the criteria for determining the scene priority in Fig. 10. In the table shown in Fig. 11, in each scene, final result information for each scene is added, and the priority is determined based on this information. The final result information is added when deciding to terminate storage in a scene storage termination determination that is explained later. The types of final result information and priority are as shown in the example in Fig. 11.

In this way, when vacant space has been secured, a digest scene starts to be stored in the digest replay buffer 1 (Step S9).

Next, if the time allocated for the digest replay time is finished, a PK scene is replayed, if time is not finished, the process shown in Fig. 6 continues.

In Fig. 6, a game calculation and scene storage loop process is carried out (Step S10).

In other words, in the processes from Step S9 to Step S10, the simulation calculation results from the determined storage start time until the determined termination time are stored in the buffer vacant space as a time series as a single digest scene.

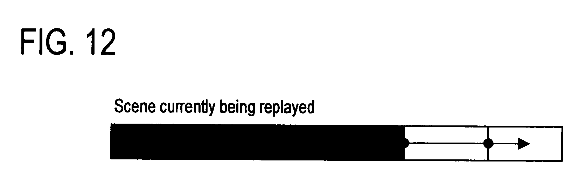

Next, the game calculation passes in one frame units, and at the same time the scene is stored in the digest replay buffer 1 as shown in Fig. 12.

If a digest scene exceeds 12 seconds, then as explained earlier regarding Fig. 3 the beginning of the currently stored scene only is taken to be excess and deleted by overwriting in a sliding action. In this way, the recorded length of a single scene can be kept to within 12 seconds (Step S11).

Next, the timing for terminating storage of a single scene set in the digest replay buffer 1 is determined (Step S12). Therefore, the process in Step S12 functions as digest scene termination determination means in the image processing device according to the present invention.

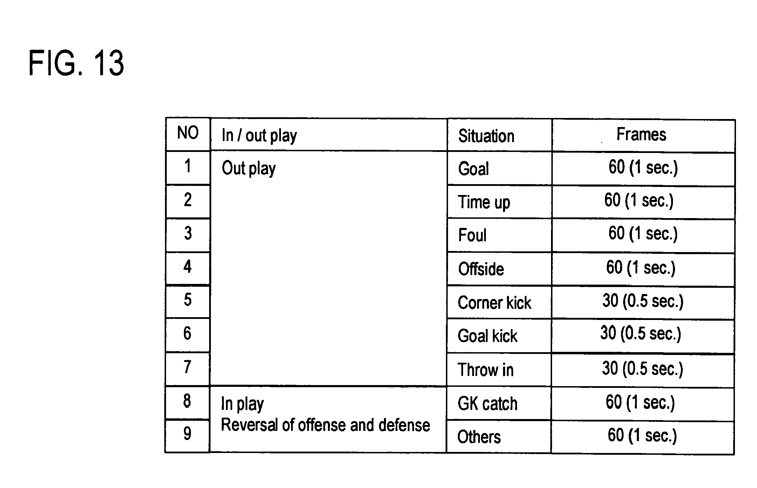

Fig. 13 is an example of scene storage termination conditions. When the frames indicated in the table in Fig. 13 have passed, storage of the scene is terminated. As explained regarding stock scene deletion determination (Step S8), it is necessary to add final result information to the stored scene.

When scene storage is terminated and time is finished, the PK scene is replayed; when time is not finished the processes in Fig. 6 continue. It is determined whether to temporarily stop the game calculation or not (Step S13).

If the following conditions are satisfied as determination conditions, game calculation is temporarily stopped to avoid the situation that a goal or another important scene cannot be stored.

In other words, as the conditions, when the number of remaining seconds in the digest replay buffer 1 is 12 seconds or less, or when the final result information priority (Fig. 11) of all the scenes stored in the digest replay buffer 1 is "2" or higher.

When a calculation temporary stop cancellation command is issued from the simultaneously processed digest scene replay sequence side, the calculation stop is cancelled (Step S14).

Here, in Fig. 6, the process when there is an emergency scene set command (Step S15) is explained. In the simultaneously processed digest scene replay sequence, if there is no next scene to be replayed after a scene has been replayed, the next digest scene to be replayed is forcibly set in the digest replay buffer 1. Also, when the emergency scene set command is issued, if normal calculation is being carried out the scene at that point in time in the primary buffer 2 is set in the digest replay buffer 1 (Step S15a). Then the process returns to the calculation loop.

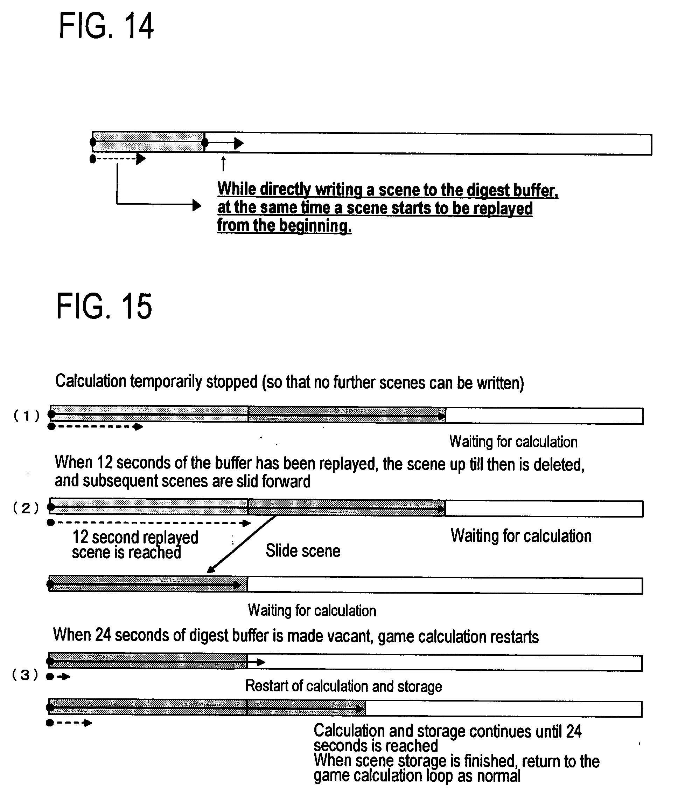

In the case of the game calculation and scene storage loop, as shown in Fig. 14, a scene is directly written to the digest replay buffer 1, and at the same time replay starts from the beginning. In this way, as long as the game calculation is faster than the game replay speed, the scene storage speed speeds up absolutely, and the situation that a scene cannot be replayed can be avoided.

The game replay speed may be the same as the actual time. Also, in simulations dealing with long periods of time such as simulations of planetary bodies, replay may be faster than the actual speed.

Here, in the case of the game calculation and scene storage loop, scene storage and calculation and replay are simultaneous processes, but it is possible that satisfaction of the storage termination conditions may not occur. On the other hand, there is a limit to the capacity of the digest replay buffer 1 (in the embodiment it is 36 seconds). Therefore, it is necessary that there be a response to this type of situation.

If the amount stored in the digest replay buffer 1 exceeds 24 seconds, the process shown in Fig. 15 is carried out (Step S15b).

In other words, (1) temporarily stop calculation, and no more of the scene is written. Next, (2) when replay of the scene has reached 12 seconds' capacity of the digest replay buffer 1, the scene data up till then is deleted, and the subsequent scene is slid and calculation is awaited. Furthermore, (3) when 24 seconds of vacant buffer capacity has been created, game calculation is restarted. Again, calculation and storage continues until 24 seconds' worth has been stored. When scene storage is terminated the process returns to the game calculation loop as normal. The rationale behind the 24 seconds referred to above is if 12 seconds or more vacant capacity is not available in the digest replay buffer 1, after the scene is stored the calculation temporary stop determination conditions will be satisfied, calculation will stop, and again it is possible that emergency scene setting will become necessary.

Here, in the above scene setting processes (Steps S3, S6, S9, and so on), the data stored in the buffer in the case of a soccer game can include for example the following.

Player replay data for players that have appeared and ball replay data.

Furthermore, player replay data can include the following data.

### Action number

Previous action number (link source)
Node control (face orientation direction)
Motion frame position
Previous action completion position (link source)
Node control (face orientation direction)
X position (world coordinate)
Y position (world coordinate)
Z position (world coordinate)
Rotation direction (world coordinate: rotation about the Y-axis)
Orientation at previous action termination time (link source)
Blend ratio for rendering

Next, the digest scene replay flow as shown in Fig. 7 is explained. As has been explained previously, it is a characteristic of the present invention that this digest scene replay is carried out simultaneously with the digest scene storage process.

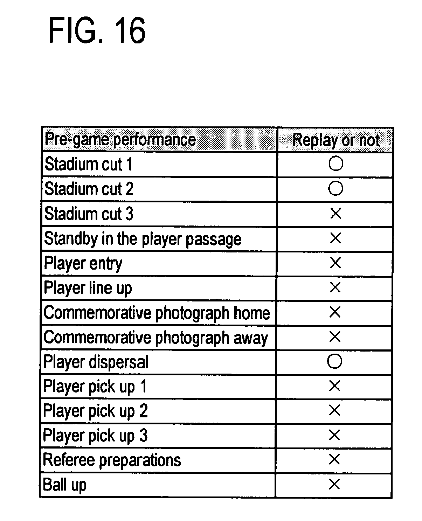

First, the pre-digest game performance process is carried out (Step S20). In the case of a normal soccer game video, video is displayed prior to the game as a game video performance. However, in digest replay the performance scenes prior to the game are few, for example, in the digest game pre-performance table shown in Fig. 16, only the scenes with a O symbol in the "Replay or not" column are displayed before replay in a digest video.

Next, the digest scene stored in the digest replay buffer 1 is replayed (Step S21). At this time, besides always starting to read out from the start of the replay buffer 1, digest scenes to be replayed may be selected. In other words, in the image processing device according to the present invention, as the process after Step S21 an arbitrary digest scene may be selected by functioning as selection means for digest scenes to be replayed. Or, digest scenes with high priority may be automatically selected and replayed.

In this way, when replay of the digest scenes is finished, it is determined whether to replay a performance scene or not (Step S22). If there is a performance scene, the performance scene is replayed (Step S23).

It is determined whether the digest is a goal scene or not (Step S24). If the digest is a goal scene, the scene is replayed again as a re-play (Step S25).

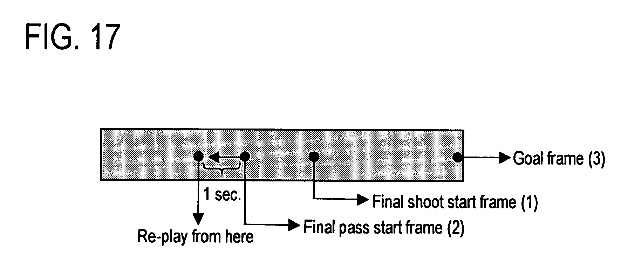

The timing of the re-play is determined using the following information and is explained by reference to Fig. 17 which explains the re-play timing.
- Final start to shoot frame (1): frame at which final shoot started
- Final start to pass frame (2): frame at which final pass started

If there is a value that is that of the frame at which final pass started (2), re-play is carried out from one second prior to that frame. If there is no value that is the frame at which final pass started (2), re-play is carried out from one second prior to the frame at which final shoot started (1). If there is also no frame at which final shoot started (1), re-play is carried out from five seconds prior to the goal frame (3).

Next, the scene whose replay has finished is deleted from the digest replay buffer 1 (Step S26). As explained in connection with Fig. 10, when a scene whose replay has been finished is deleted, the following scenes are moved forward to provide vacant space. Deletion of scenes whose replay has been completed as in this Step S26 is realized as the function of buffer space release means in the image processing device according to the present invention.

Next, if game calculation has been temporarily stopped, it is determined whether the stop can be cancelled or not (Step S27). If the stop can be cancelled, a calculation stop cancellation command is issued to the game calculation sequence, and calculation is started again (Step S28). Here, determining whether calculation can be temporarily stopped is common with the "calculation temporary stop determination" (Step S12) of the game calculation sequence in Fig. 6.

Next, if the scene whose replay is finished that has been deleted from the digest replay buffer 1 is the time up scene, the digest of the PK shoot out is replayed (Step S30). If the deleted scene is anything other than the time up scene, the procedure returns to replay the next replay scene (Step S21). If there is no next replay scene, an emergency scene setting command is issued to the game calculation sequence (Step S29). When replay of the digest PK shoot out (Step S9) is finished, there is a transition to the post-game performance (Step S31). After the post-game performance, the sequence is the same as full time (replay of the full game time).

As explained above with reference to the drawings, the problems that replay buffer capacity is limited and game calculations take time have been solved by the present invention.

The above embodiment has been explained assuming the capacity of the primary buffer 2 is five seconds, the capacity of the digest replay buffer 2 is 36 seconds, and one scene can store a maximum of 12 seconds, but this is just an embodiment, and the application of the present invention is not limited to these values.

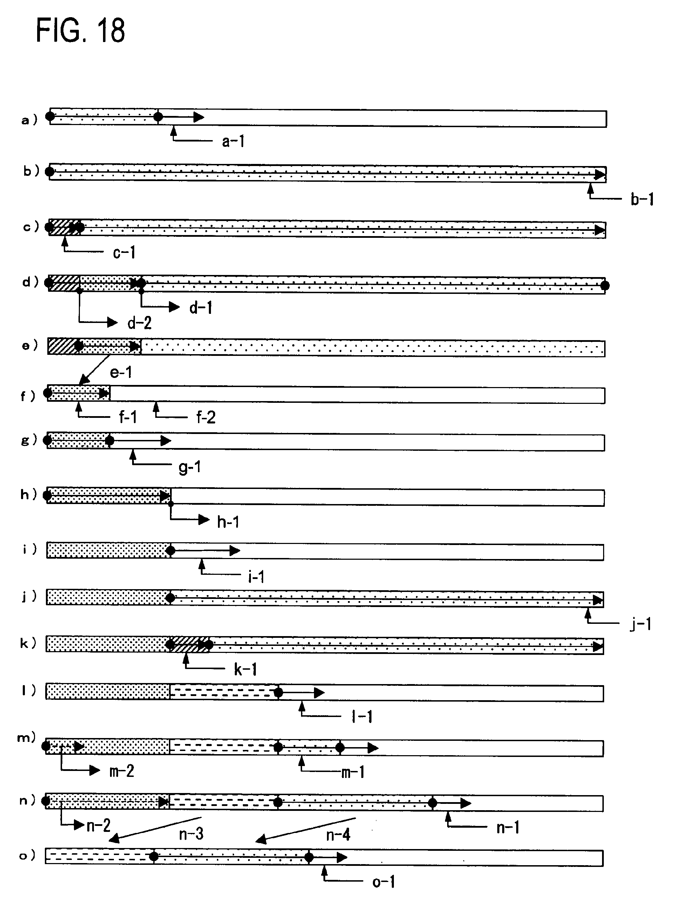

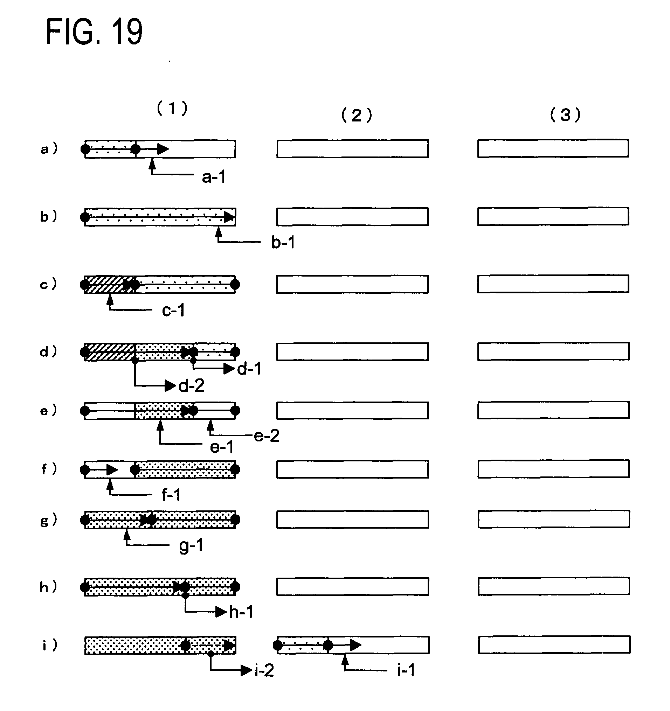

Furthermore, in creating the digest, the configuration of the primary buffer 10 and replay buffer 1 as explained above in connection with Fig. 2 is an embodiment, the essence of the present invention is not limited to the configuration shown in Fig. 2, and various configurations of buffer are possible in realizing the present invention. Figs. 18 and 19 show examples of other configurations of buffer.

Fig. 18 is an example where the primary buffer 10 is not used, and the present invention is realized with the digest replay buffer 1 only.

Scenes are directly written into the digest replay buffer 1 (Fig. 18, a-1). If the buffer is used to the end (b-1), the digest buffer 1 is treated as a ring buffer, and is overwritten from the beginning (c-1).

When specific action start timing occurs (d-1), the immediately prior dribbling or keep motion becomes the digest scene start point (d-2). Then, the scene is extracted (e-1) from the digest scene start point (d-2). The extracted scene is moved forward (f-1), and the unnecessary scene is released as vacant space (it is not necessary to fill with zeroes) (f-2).

Further, the scene is written to form the digest (g-1). When particular conditions are satisfied, the recording is terminated (h-1), and a single digest scene is concluded.

Again a scene is directly written to the digest buffer 1 (i-1). If the buffer is used to the end (j-1), the scene that will form the digest is overwritten from the rear of the scene, with the digest buffer 1 as a ring buffer (k-1).

In the same way, when the second digest scene has been recorded, the scene is directly written to the digest buffer 1 (1-1).

In this way, when display of the pre-game performance is finished, in parallel with the recording of new scenes (m-1), replay of scenes from the top of the buffer starts (m-2). During the process of recording a scene (n-1), when replay of a scene is finished (n-2).

The space for scenes that have been replayed is made vacant, scenes are moved forward into that empty space (n-3, n-4), and at the same time scenes are directly written (o-1).

In the example shown in Fig. 18, if the digest replay buffer 1 is further controlled by a File Allocation Table (FAT), the action of moving forward (moving data) (e-1, n-3, n-4) becomes unnecessary.

In other words, the whole storage area is divided into segment blocks of a fixed size (for example, 2KB, 4KB, 8KB, 16KB, or similar) known as clusters, and the FAT has a control area having a two-dimensional table structure that searches at high speed in block units the used areas and empty areas within the recording area.

Therefore, the file can be realized by allocating one or a plurality of clusters depending on the data size. At this time, information regarding what clusters constitute a particular file (the clusters constituting a file are not necessarily contiguous) or whether a cluster is currently being used or not is recorded and controlled in the FAT. In this way, if information on areas currently in use or not in use is controlled in cluster units, copying between memories, in other words the operation (data movement) of "moving forward" becomes unnecessary.

Fig. 19 is an example of yet another configuration of buffers, an example realized without the primary buffer 10, but using a plurality (in the example in Fig. 18, three) of digest replay buffers 1 (1), (2), (3).

Scenes are written directly to one of the digest replay buffers 1 (1) (a-1). If the buffer is used up to the end (b-1), the digest buffer 1 is overwritten from the top as a ring buffer (c-1).

Next, if a specific action start timing occurs (d-1), the immediately prior dribbling or keep motion becomes the digest scene start point (d-2). The scene is extracted (e-1), and the scene that is to become the digest is written (e-2).

Then, if the buffer is used to the end, the buffer is treated as a ring buffer, and overwritten from the beginning (f-1).

Furthermore, when the start point of the digest scene is reached the start point is overwritten (g-1), and when specific conditions are satisfied recording is stopped (h-1).

When the pre-game performance process is finished, replay can start in parallel with recording (i-1), so replay of scenes from the top of the digest scenes starts (i-2).

Here, in the explanation of the embodiment a sports game has been explained as the subject, and in particular an embodiment that implements a soccer game has been explained. However, the present invention is not limited to these types of cases. As stated earlier, the present invention may be applied not only to sports games, but also to weather, war, ocean currents, heavenly bodies, and other images that change.

Furthermore, the technical scope of the present invention extends to forms equivalent to the scope of the claims.

## Claims

1. A program that is executed on a computer, for controlling display of a digest of simulation video, the program causing the computer to function as:
a simulation calculation unit that carries out simulation calculations in time series order to generate simulation video of phenomena that changes with passage of time;
a digest scene start determination unit that determines a digest scene start time based on a predetermined start condition;
a digest scene termination determination unit that determines the digest scene termination time based on predetermined termination conditions;
a buffer storage unit that stores the simulation calculation result from the determined starting time until the determined termination time as a single digest scene in free area in time series order, and that is capable of storing a plurality of the digest scenes;
a digest scene selection unit that after one or more digest scenes are stored in the buffer storage unit selects a single digest scene from among the digest scenes;
a simulation video generation unit that reads the selected digest scene in time series order and generates simulation video;
a simulation video display unit that replays and displays the generated simulation video at a speed slower than a speed of the simulation calculation; and
a space release unit that after the selected digest scene has been read in time series order logically makes free, as free area, space of the buffer storage unit in which the selected digest scene is stored.

2. The program according to claim 1, wherein the single digest scene selected by the digest scene selection unit is the oldest digest scene in the time series order.

3. The program according to claim 1, wherein the start time determined by the digest scene start determination unit is a time set corresponding to the predetermined start conditions, the time being prior to a time of occurrence of the predetermined start conditions for a predetermined period of time.

4. The program according to claim 1, wherein simulation calculation by the simulation calculation unit is temporarily stopped if the buffer storage unit is full, and is restarted when free area is made in the buffer storage unit.

5. The program according to claim 1, wherein a priority is set for the digest scenes, and when the buffer storage unit is full, the space release unit logically releases digest scenes with low priority as free area.

6. The program according to claim 1, wherein when there is no digest scene that can be replayed in the buffer storage unit, the buffer storage unit stores a special emergency scene.

7. The program according to claim 1, wherein the buffer storage unit has primary buffer space and digest replay buffer space, the simulation calculation results by the simulation calculation unit are stored one by one in the primary buffer space,
the termination time determined after the start time is determined by the digest scene start determination unit and the digest scene termination determination unit based on the simulation calculation results stored in the primary buffer space, and
the digest scene from the determined start time to the termination time is stored in the digest replay buffer space.

8. A storage medium that stores a program controlling display of a digest of simulation video, and that is executed on a computer,
the program casing the computer to function as:
a simulation calculation unit that carries out simulation calculations in time series order to generate simulation video of phenomena that change with passage of time;
a digest scene start determination unit that determines a digest scene start time based on predetermined start conditions;
a digest scene termination determination unit that determines a digest scene termination time based on predetermined termination conditions;
a buffer storage unit that stores a simulation calculation result from the determined starting time until the determined termination time as a single digest scene in free area in time series order, and that is capable of storing a plurality of the digest scenes;
a digest scene selection unit that after one or more digest scenes are stored in the buffer storage unit selects a single digest scene from among the digest scenes;
a simulation video generation unit that reads the selected digest scene in time series order and generates simulation video;
a simulation video display unit that replays and displays the generated simulation video at a speed slower than a speed of the simulation calculation; and
a space release unit that after the selected digest scene has been read in time series order logically releases, as free area, space of the buffer storage unit in which the selected digest scene is stored.

9. An image processing device that controls and displays digests of simulation video, comprising:
a computer;
a buffer storage device; and
an image display device, wherein
the computer is made to function as a simulation calculation unit that carries out simulation calculations in time series order to generate simulation video of phenomena that change with passage of time, a digest scene start determination unit that determines a digest scene start time based on predetermined start conditions, and a digest scene termination determination unit that determines a digest scene termination time based on predetermined termination conditions, and wherein a plurality of digest scenes are stored in free area in the buffer storage device in time series order with the simulation calculation result from the determined starting time until the determined termination time as a single digest scene, and further
the computer is made to function as a digest scene selection unit that after one or more digest scenes are stored in the buffer storage unit selects a single digest scene from among the digest scenes, and a simulation video generation unit that reads the selected digest scene from the buffer storage device in time series order and generates simulation video, and wherein the simulation video generated by the simulation video generation unit is displayed on the image display device, and
the computer is made to function as a space release unit that after the selected digest scene has been read in time series order logically releases, as free area, space of the buffer storage unit in which the selected digest scene was stored.

10. A method of controlling display of a digest of simulation video, comprising the steps by a computer of:
carrying out simulation calculations in time series order to generate simulation video of phenomena that change with passage of time;
carrying out digest scene start determination that determines the digest scene start time based on predetermined start conditions;
carrying out digest scene termination determination that determines the digest scene termination time based on predetermined termination conditions;
storing a simulation calculation result as a single digest scene in free area in time series order in a buffer storage unit that is capable of storing a plurality of digest scenes from the determined start time to the determined termination time;
selecting a single digest scene from among the digest scenes after one or more digest scenes have been stored in the buffer storage unit;
generating simulation video by reading the selected digest scene in time series order;
displaying the generated simulation video in an image display unit by replaying at a speed slower than a simulation calculation speed; and
logically releasing, as free area, space in the buffer storage unit in which the selected digest scene is stored, after the selected digest scene has been read in time series order.
